# EUROPÄISCHE PATENTANMELDUNG

(11) **EP 1 479 468 A2**
(43) Veröffentlichungstag der Anmeldung: **24.11.2004**
(21) Anmeldenummer: 04011232.8
(22) Anmeldetag: 12.05.2004
(51) Int. Cl.: B23C 5/10

(54) **Schaftfräswerkzeug und Verfahren zu dessen Herstellung**

(30) Priorität: 23.05.2003 DE 10323919
(71) Anmelder: Ledermann GmbH, 72160 Horb (DE); CERATIZIT Horb GmbH, 72160 Horb (DE)
(72) Erfinder: Galli, Oliver, 71154 Nufringen (DE); Kocher, Georg, 72072 Tübingen (DE)
(74) Vertreter: Riedel, Peter

(57) **Zusammenfassung**

Ein Schaftfräswerkzeug (1) besitzt mindestens eine am Umfang des Werkzeuggrundkörpers (2) befindliche Schneide (3) und einen vor dieser angeordneten Spanraum (4). Der Werkzeuggrundkörper (2) besteht aus einem pulvermetallurgischen und/oder keramischen Ausgangsmaterial und die Schneide (3) ist aus einem Hartmetall gebildet. Jede Schneide (3) besteht aus mehreren Schneidplatten (5) und an dem Werkzeuggrundkörper (2) sind Plattensitze (6) ausgebildet, an denen die Schneidplatten (5) aufgenommen und stoffschlüssig verbunden sind.

## Beschreibung

Die Erfindung bezieht sich auf ein Schaftfräswerkzeug mit am Umfang aufgebrachten Schneiden der im Oberbegriff des Anspruchs 1 angegebenen Gattung sowie auf ein Verfahren zu dessen Herstellung.

Schaftfräser werden beispielsweise eingesetzt, um Werkstücke aus Holzwerkstoffen, Kunst- und Verbundwerkstoffen zu bearbeiten, beispielsweise um diese zu trennen oder zum Fügen vorzubereiten. Hierbei wird zunehmend mit höheren Schnittgeschwindigkeiten, beispielsweise mehr als 30 m/min und größeren Werkstückdicken, z.B. 48 mm gearbeitet.

Dies führt dazu, daß die konventionellen Schaftwerkzeuge, bestehend aus einem Stahlgrundkörper und am Umfang angeordneten polykristallinen Diamantschneiden, nicht mehr einsetzbar sind, da die vorhandenen Schnitt- und Vorschubkräfte zu einem Auslenken des Grundkörpers führen mit der Folge, daß die Schnittgüte sich verschlechtert oder es zum Bruch des Grundkörpers kommt.

Aus der DE 199 46 799 A1 ist ein Schaftfräser mit einer aus polykristallinem Diamant oder polykristallinem Bornitrid bestehenden Schneide bekannt, der einen Grundkörper aus Stahl und einen vorderen Teil aus Hartmetall aufweist. Der vordere Teil, der die Schneide aufweist, ist durch eine Lötverbindung mit dem Grundkörper verbunden. Um eine Bruchgefahr an der Lötverbindung zu vermeiden, ist vorgesehen, daß der aus Hartmetall bestehende Teil eine Hülse ist, die auf einem einstückig mit dem Grundkörper ausgebildeten Zapfen sitzt und mit diesem an den aneinandergrenzenden Umfangsflächen verlötet ist. Bei dieser Ausführung sind in der Hülse aus Hartmetall Streifen aus polykristallinem Diamant eingelagert. Die Bearbeitung der Nuten erfolgt nachträglich und danach ist die erforderliche Bearbeitung zur Erzeugung der Schneiden notwendig, die durch Elektroerosion oder Schleifen erfolgt. Durch diesen Bearbeitungsvorgang wird ein Teil des Materials wieder entfernt.

Die EP 1 034 866 B1 beschreibt einen Schaftfräserrohling aus Hartwerkstoff, der einen Schaft zum Einspannen und einen Fräsbereich mit mehreren am Umfang angeordneten Schneiden umfaßt. Dabei wird der Werkzeugrohling durch Spritzgießen eines pulvermetallurgischen oder keramischen Ausgangsmaterials geformt und durch anschließende Sinterung zum Hartwerkstoff-Rohling weiter verarbeitet. An dem Rohling sind bereits vorgeformte Schneiden und eingeformte Spanräume ausgebildet. Die Schneiden müssen jedoch geschliffen werden, um den fertigen Schaftfräser zu erhalten, so daß ein Teil des Materials wieder abgetragen wird. Ein Nachschleifen des Werkzeugs ist nur begrenzt möglich.

Aus der EP 0 458 434 B1 ist ein Rotationsschneidwerkzeug mit sich schraubenförmig entlang seiner Länge erstreckenden Schneidkanten aus hartem Material bekannt. Dieses Werkzeug weist mindestens ein Paar schraubenförmiger Nuten in den Seitenwänden des Rohteils auf, wobei ein hartes Material innerhalb der Nuten vorgesehen ist, das die Schneide bildet. Diese Schneide ist entlang der Vorderkante der Nuten ausgebildet, wobei das polykristalline Material in situ in den Nuten geformt wird. Nachteilig an dieser Lösung ist, daß mit sehr hohem Aufwand eine Schneide mit einer nur relativ geringen Schneidenhöhe erzeugt werden kann und somit ein mehrfaches Nachschärfen der Schneide nicht möglich ist.

Der vorliegenden Erfindung liegt die Aufgabe zugrunde, ein Schaftfräswerkzeug der gattungsgemäßen Art zu schaffen, das eine hohe Biegesteifigkeit aufweist und das kostengünstig herstellbar ist. Außerdem ist es Aufgabe der Erfindung, ein Verfahren zur Herstellung eines solchen Schaftfräswerkzeugs anzugeben.

Diese Aufgabe wird durch ein Schaftfräswerkzeug mit den Merkmalen des Anspruchs 1 sowie durch ein Verfahren mit den Merkmalen des Anspruchs 10 gelöst.

Bei der vorliegenden Erfindung ist es von Vorteil, daß die Schneidplatten vor dem Fixieren auf einfache Weise in den Plattensitzen positioniert werden können und die Plattensitze eine so hohe Genauigkeit aufweisen, daß die Schneidplatten lediglich zu schärfen sind, jedoch ein Materialabtrag wie bei den Anordnungen zum Stand der Technik nicht erforderlich ist. Der Einsatz des erforderlichen Hartmetalls wird optimiert und ein mehrmaliges Nachschärfen der Schneidplatten ist möglich.

Gemäß einer bevorzugten Ausgestaltung der Erfindung verlaufen die Spanräume und die aus Schneidplatten gebildeten Schneiden spiralförmig entlang des Umfangs des Werkzeuggrundkörpers. Dabei ist es besonders vorteilhaft, daß die Schneide aus einem ersten Schneidenabschnitt und einem zweiten Schneidenabschnitt besteht, wobei der zweite Schneidenabschnitt gegenläufig zum ersten Schneidenabschnitt verläuft. Die Längen der jeweiligen Schneidenabschnitte können gleich oder unterschiedlich sein, je nach Auslegung des Werkzeugs.

Darüber hinaus ist es zweckmäßig, daß die Plattensitze derart gestaltet sind, daß die Schneidplatten bezüglich ihrer Lage dem Drall entsprechen.

Alternativ zu der spiralförmig verlaufenden Schneide ist es auch möglich, daß die Plattensitze und die Schneidplatten auf einer Geraden hintereinander liegen und unter einem Winkel zu der Geraden angeordnet sind. Dieser Winkel der Schneidplatten zur Geraden bzw. zur Längsachse des Werkzeuggrundköpers kann beispielsweise ca. 15° betragen. Eine weitere Alternative des Schaftfräswerkzeugs besteht darin, daß der Spanraum aus einer Vielzahl von Spantaschen gebildet ist, wobei diese Spantaschen jeweils vor einer Spanplatte angeordnet sind. Gemäß einer zweckmäßigen Weiterbildung des Schaftfräswerkzeugs ist vorgesehen, daß eine am stirnseitigen Ende befindliche Endschneide über das Ende des Werkzeuggrundkörpers hervorsteht und eine Stirnschneide bildet.

Gemäß einer zweckmäßigen Weiterbildung des Verfahrens ist vorgesehen, daß die Spanräume durch bezogen auf die Längsachse des zylindrischen Körpers spiraliges Fräsen von Nuten erzeugt werden. Außerdem ist es vorteilhaft, daß das Herstellen der Spanräume in einer ersten Fräsoperation und das Herstellen der Plattensitze in einer anschließenden zweiten Fräsoperation erfolgt. Als stoffschlüssige Verbindung der Schneidplatten an den Plattensitzen erfolgt dies durch Hartlöten.

Ausführungsbeispiele der Erfindung sind nachstehend anhand der Zeichnung näher erläutert. In der Zeichnung zeigt:
- Fig. 1: eine Ansicht eines Schaftfräswerkzeugs mit gewendelten Spanräumen und Schneiden,
- Fig. 2 und 3: Ansichten des Werkzeuggrundkörpers vor dem Anbringen der Schneidplatten,
- Fig. 4: eine Ausführung mit als Spantaschen ausgeführten Spanräumen.

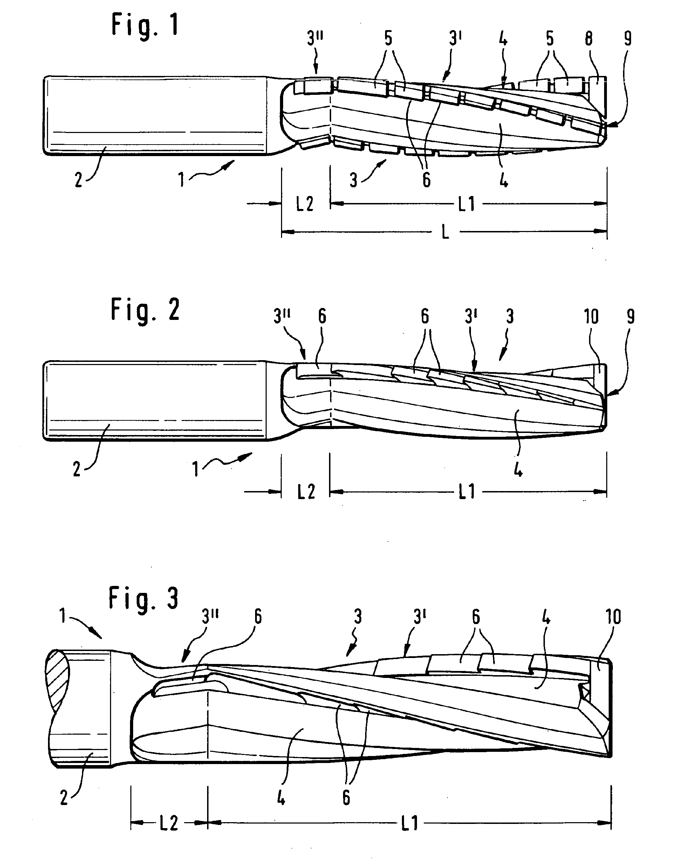

In der Fig. 1 ist ein Schaftfräswerkzeug 1 dargestellt, das einen Werkzeuggrundkörper 2 mit daran angeordneten Schneiden 3 umfaßt. Die Schneiden 3 bestehen aus einer Vielzahl von Schneidplatten 5, die an Plattensitzen 6 stoffschlüssig befestigt sind. Die Plattensitze 6 sind entlang spiralförmig ausgebildeter Nuten geformt, wobei die spiralförmigen Nuten als Spanraum 4 dienen. An dem vorderen Ende 9 des Schaftfräswerkzeugs 1 ist eine Endschneide 8 vorgesehen, die über das vordere Ende 9 des Werkzeuggrundkörpers 2 etwas hervorsteht und auf diese Weise eine Stirnschneide bildet. Die Spanräume 4 und Schneiden 3 besitzen eine Gesamtlänge L, die durch zwei Teillängen L1 und L2 gebildet ist, wobei sich ein erster Schneidenabschnitt 3' über die Teillänge L1 erstreckt, wohingegen ein zweiter Schneidenabschnitt 3'' über die zweite Teillänge L2 reicht. In dem dargestellten Ausführungsbeispiel ist die Länge des ersten Schneidenabschnitts wesentlich größer als die Länge des zweiten Schneidenabschnitts.

In den Fig. 2 und 3 sind Werkzeuggrundkörper 2 gezeigt, bei denen die Anordnung der Plattensitze 6 ersichtlich ist, wobei jeweils an dem vorderen Ende 9 ein Plattensitz 10 für die Endschneide 8 ausgebildet ist. Im übrigen stimmen die Bezugszeichen in Fig. 2 und 3 mit denjenigen der Fig. 1 überein.

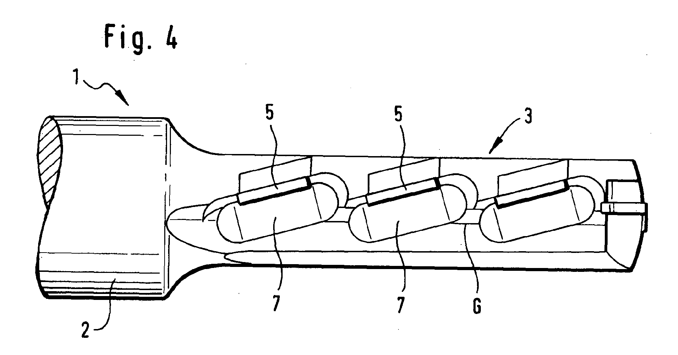

Im Ausführungsbeispiel der Fig. 4 sind die Schneidplatten 5 entlang einer Geraden hintereinander angeordnet, wobei die Schneidkanten der Schneidplatten 5 einen Winkel zu der Geraden G einschließen, der beispielsweise eine Größe von ca. 15° haben kann. Im Unterschied zu Fig. 1 ist der Spanraum nicht durch eine durchgehende spiralförmige Nut gebildet, sondern durch einzelne Spantaschen 7, die sich jeweils vor einer Schneidplatte 5 befinden.

Die Herstellung des Schaftfräswerkzeugs erfolgt nach einem Verfahren, bei dem zunächst ein Grundkörper aus einem pulvermetallurgischen und/oder keramischen Ausgangsmaterial geformt wird. Dabei wird unter Aufbringung einer entsprechenden Kraft ein zylindrischer Körper geformt, in dem mindestens ein Spanraum durch eine erste Fräsoperation eingebracht wird. Vorzugsweise ist dieser Spanraum spriralförmig, wobei auch eine Teilung in zwei Schneidenabschnitte möglich ist. In einer zweiten Fräsoperation werden entlang des Spanraums Plattensitze geformt, so daß die vollständige geometrische Gestaltung des Grundkörpers erreicht ist. Der so gestaltete Werkzeuggrundköper wird anschließend gesintert und danach erfolgt das stoffschlüssige Befestigen der Schneidplatten an den Plattensitzen.

## Patentansprüche

1. Schaftfräswerkzeug (1) mit mindestens einer am Umfang des Werkzeuggrundkörpers (2) befindlichen Schneide (3) und einem vor dieser angeordneten Spanraum (4), wobei der Werkzeuggrundkörper (2) aus einem pulvermetallurgischen und/oder keramischen Ausgangsmaterial besteht und die Schneide (3) bzw. Schneiden aus einem Hartmetall gebildet sind,
**dadurch gekennzeichnet, daß** jede Schneide (3) aus mehreren Schneidplatten (5) besteht und an dem Werkzeuggrundkörper (2) Plattensitze (6) ausgebildet sind, an denen die Schneidplatten (5) aufgenommen und stoffschlüssig verbunden sind, und daß der Spanraum (4) bzw. die Spanräume sowie die Plattensitze (6) im Werkzeuggrundkörper (2) gefräst sind, bevor der Werkzeuggrundkörper (2) durch Sintern verfestigt ist.

2. Schaftfräswerkzeug nach Anspruch 1,
**dadurch gekennzeichnet, daß** der Spanraum (4) und die aus Schneidplatten (5) gebildeten Schneiden (3) spiralförmig verlaufen.

3. Schaftfräswerkzeug nach Anspruch 2,
**dadurch gekennzeichnet, daß** die Schneide (3) aus einem ersten Schneidenabschnitt (3') und einem zweiten Schneidenabschnitt (3'') besteht, wobei der zweite Schneidenabschnitt (3'') gegenläufig zum ersten Schneidenabschnitt (3') verläuft.

4. Schaftfräswerkzeug nach Anspruch 3,
**dadurch gekennzeichnet, daß** die Länge (L1) des ersten Schneidenabschnitts (3') mindestens annähernd gleich der Länge (L2) des zweiten Schneidenabschnitts (3'') ist.

5. Schaftfräswerkzeug nach Anspruch 3,
**dadurch gekennzeichnet, daß** die Länge (L1) des ersten Schneidenabschnitts (3') unterschiedlich zur Länge (L2) des zweiten Schneidenabschnitts (3'') ist.

6. Schaftfräswerkzeug nach einem der Ansprüche 1 bis 5,
**dadurch gekennzeichnet, daß** die Plattensitze (6) derart gestaltet sind, daß die Schneidplatten (5) bezüglich ihrer Lage dem Drall entsprechen.

7. Schaftfräswerkzeug nach Anspruch 1,
**dadurch gekennzeichnet, daß** die Plattensitze (6) und Schneidplatten (5) auf einer Geraden (G) hintereinander und unter einem Winkel zu der Geraden (G) angeordnet sind.

8. Schaftfräswerkzeug nach einem der Ansprüche 1 bis 7,
**dadurch gekennzeichnet, daß** der Spanraum aus einer Vielzahl von Spantaschen (7) gebildet ist.

9. Schaftfräswerkzeug nach einem der Ansprüche 1 bis 8,
**dadurch gekennzeichnet, daß** eine am stirnseitigen Ende (9) befindliche Endschneide (8) über das Ende des Werkzeuggrundkörpers (2) hervorsteht und eine Stirnschneide bildet.

10. Verfahren zur Herstellung eines Schaftfräswerkzeugs (1), das einen Werkzeuggrundkörper (2) und daran angebrachte Schneiden (3) aus Schneidplatten (5) umfaßt, wobei der Werkzeuggrundkörper (2) aus einem pulvermetallurgischen und/oder keramischen Ausgangsmaterial besteht, das zu einem zylindrischen Körper gepreßt wird und in dem zylindrischen Körper mindestens ein Spanraum (4) durch Fräsen erzeugt wird und eine Vielzahl von Plattensitzen (6) für die Schneidplatten (5) ebenfalls durch Fräsen geformt werden und danach der bezüglich seiner Form gestaltete Werkzeuggrundkörper (2) gesintert wird und schließlich die Schneidplatten (5) stoffschlüssig an den Plattensitzen (6) mit dem Werkzeuggrundkörper (2) verbunden werden.

11. Verfahren nach Anspruch 10,
**dadurch gekennzeichnet, daß** die Spanräume (4) durch bezogen auf die Längsachse des zylindrischen Körpers spiraliges Fräsen von Nuten erzeugt werden.

12. Verfahren nach Anspruch 10 oder 11,
**dadurch gekennzeichnet, daß** das Herstellen der Spanräume (4) in einer ersten Fräsoperation und das Herstellen der Platten (6) in einer anschließenden zweiten Fräsoperation erfolgt.

13. Verfahren nach einem der Ansprüche 10 bis 12,
**dadurch gekennzeichnet, daß** die stoffschlüssige Verbindung durch Hartlöten erfolgt.
